# EUROPEAN PATENT APPLICATION

(11) **EP 2 333 457 A2**
(43) Date of publication of application: **15.06.2011**
(21) Application number: 10250771.2
(22) Date of filing: 14.04.2010
(51) Int. Cl.: F25B 13/00, F25B 29/00, F25B 47/02

(54) **Water circulation apparatus associated with refrigerant system**

(30) Priority: 11.12.2009 KR 20090123571
(71) Applicant: LG Electronics Inc., Youngdungpo-ku Seoul (KR)
(72) Inventor: Lee, Sung Su, Changwon City Gyoungsangnam-do 641-711 (KR); Jung, Seung Hyun, Changwon City Gyoungsangnam-do 641-711 (KR)
(74) Representative: Palmer, Jonathan R.

(57) **Abstract**

Provided is a water circulation apparatus associated with a refrigerant system. Even through an indoor temperature is very low, the refrigerant system may be stably operated and high-temperature water may be obtained.

## Description

### BACKGROUND

The present disclosure relates to a water circulation apparatus associated with a refrigerant system to perform a hot water supply function and a cooling/heating function.

A water circulation apparatus associated with a refrigerant system is an apparatus in which a refrigerant cycle and a water circulation cycle are coupled. Thus, a refrigerant flowing into a refrigerant pipe and water flowing into a water pipe are heat-exchanged with each other to supply hot water and cool and heat an indoor room.

In a related art system, when an indoor temperature is very low, operation performance is deteriorated, and also it is difficult to obtain high-temperature water.

In addition, when a defrosting process is required for a heat-exchanger included in a refrigerant system during a heating mode of the refrigerant system, since the refrigerant system is operated in a cooling mode, an indoor room is not heated during the cooling operation of the refrigerant system, and also, the high-temperature water is not obtained.

### SUMMARY

Embodiments provide a water circulation apparatus associated with a refrigerant system in which operation performance can be improved and high-temperature water can be obtained.

Embodiments also provide a water circulation apparatus associated with a refrigerant system in which an indoor room can be heated and high-temperature water can be obtained when a refrigerant system is operated in a defrosting mode.

In one embodiment, a water circulation apparatus associated with a refrigerant system includes: a first refrigerant system including a first compressor and a first heat-exchanger in which air is heat-exchanged with a first refrigerant, the first refrigerant system performing a refrigerant cycle in which the first refrigerant flows; a second refrigerant system including a second compressor, the second refrigerant system performing a refrigerant cycle in which a second refrigerant flows; an intermediate heat-exchanger in which the first refrigerant is heat-exchanged with the second refrigerant while the first and second refrigerant flow; and a water circulation unit in which water is heat-exchanged with the second refrigerant while the water is circulated, the water circulation unit performing a water circulation cycle, wherein the water circulation unit includes a water pipe through which the water flows, a branch pipe branched from the water pipe to pass through the intermediate heat-exchanger, and a valve disposed in the branch pipe to regulate a flow of the water, wherein, when a defrosting operation condition for defrosting the first heat-exchanger is satisfied during heating mode operations of the first refrigerant system and the second refrigerant system, the first refrigerant system is operated in a cooling mode, and water within the branch pipe is heat-exchanged with one or more refrigerants flowing into the intermediate heat-exchanger.

The details of one or more embodiments are set forth in the accompanying drawings and the description below. Other features will be apparent from the description and drawings, and from the claims.

### BRIEF DESCRIPTION OF THE DRAWINGS

Fig. 1 is a schematic view of a water circulation apparatus associated with a refrigerant system according to a first embodiment.
Fig. 2 is a flowchart illustrating a defrosting operation method of a water circulation apparatus associated with a refrigerant system according to a first embodiment.
Fig. 3 is a flowchart illustrating a defrosting operation method of a water circulation apparatus associated with a refrigerant system according to a second embodiment.
Fig. 4 is a flowchart illustrating a defrosting operation method of a water circulation apparatus associated with a refrigerant system according to a third embodiment.
Fig. 5 is a flowchart illustrating a defrosting operation method of a water circulation apparatus associated with a refrigerant system according to a fourth embodiment.
Fig. 6 is a schematic view of a water circulation apparatus associated with a refrigerant system according to a fifth embodiment.
Fig. 7 is a flowchart illustrating a defrosting operation method of a water circulation apparatus associated with a refrigerant system according to a fifth embodiment.
Fig. 8 is a schematic view of a water circulation apparatus associated with a refrigerant system according to a sixth embodiment.

### DETAILED DESCRIPTION OF THE EMBODIMENTS

Reference will now be made in detail to the embodiments of the present disclosure, examples of which are illustrated in the accompanying drawings.

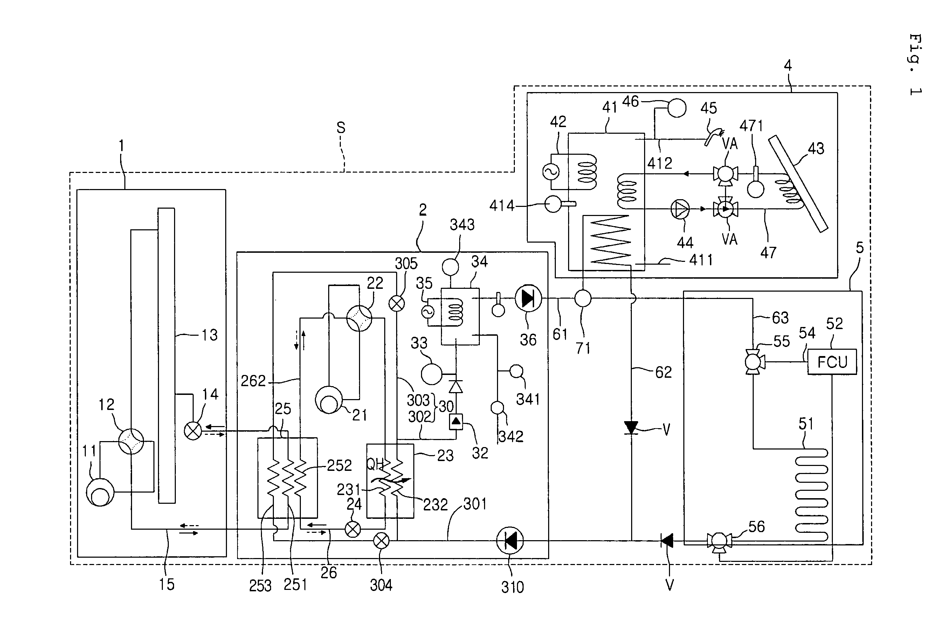

Fig. 1 is a schematic view of a water circulation apparatus associated with a refrigerant system according to a first embodiment.

Referring to Fig. 1, a water circulation apparatus S associated with a refrigerant system according to this embodiment includes a first refrigerant system 1 performing a first refrigerant cycle in which a first refrigerant is circulated, a second refrigerant system 2 in which the first refrigerant is heat-exchanged with a second refrigerant, and the second refrigerant is heat-exchanged with water, a hot water supply part 4 connected to the second refrigerant system 2 to supply hot water, and a cooling/heating part 5 connected to the second refrigerant system 2 to heat and cool an indoor room.

The second refrigerant system 2 performs a second refrigerant cycle in which the second refrigerant is circulated.

In detail, the first refrigerant system 1 includes a first compressor compressing the first refrigerant, a first four-way valve 12 regulating a flow direction of the first refrigerant discharged from the first compressor 11, an intermediate heat-exchanger 25 in which the first refrigerant is heat-exchanged with the second refrigerant, a first expansion part 14 expanding the first refrigerant, and a first heat-exchanger 13 in which the first refrigerant is heat-exchanged with outdoor air.

In this embodiment, since the intermediate heat-exchanger 25 heat-exchanges the first refrigerant with the second refrigerant, the intermediate heat-exchanger 25 may be referred to as a refrigerant-refrigerant heat-exchanger.

The first compressor 11, the first four-way valve 12, the intermediate heat-exchanger 25, the first expansion part 14, and the first heat-exchanger 13 are connected to each other through a first refrigerant pipe 15.

The second refrigerant system 2 includes a second compressor 21 compressing the second refrigerant, a second four-way valve 22 regulating a flow direction of the second refrigerant discharged from the second compressor 21, a second heat-exchanger 23 in which the second refrigerant is heat-exchanged with water, a second expansion part 24 expanding the second refrigerant, and the intermediate heat-exchanger 25 in which the first refrigerant is heat-exchanged with the second refrigerant.

The second compressor 21, the second four-way valve 22, the second heat-exchanger 23, the second expansion part 24, and the intermediate heat-exchanger 25 are connected to each other through a second refrigerant pipe 26.

In this embodiment, since the second heat-exchanger 23 heat-exchanges the second refrigerant with the water, the second heat-exchanger 24 may be referred to as a water-refrigerant heat-exchanger.

The intermediate heat-exchanger 25 includes a first passage 251 through which the first refrigerant flows and a second passage 252 through which the second refrigerant flows. The first passage 251 and the second passage 252 may be defined by the first refrigerant pipe 15 and the second refrigerant pipe 26, respectively.

On the other hand, separate first and second passages 251 and 252 may be defined in the intermediate heat-exchanger 25. At this time, the first refrigerant pipe 15 may be connected to the first passage 251, and the second refrigerant pipe 26 may be connected to the second passage 252.

The second heat-exchanger 23 includes a refrigerant passage 231 through which the second refrigerant flows and a water passage 232 through which the water flows. The refrigerant passage 231 and the water passage 232 may be defined by the second refrigerant pipe 26 and a first water pipe 30.

For example, a plate heat-exchanger may be used as the intermediate heat-exchanger 25 and the second heat-exchanger 23, but is not limited thereto.

The intermediate heat-exchanger 25 may be disposed within a first case (not shown) including the first refrigerant system 1 or a second case (not shown) including the second refrigerant system 2. Also, the first refrigerant system 1 and the second refrigerant system 2 may be disposed within a single case.

In this embodiment, for example, an R410a may be used as the first refrigerant, and an R134a may be used as the second refrigerant. That is, the first refrigerant of the first refrigerant system 1 is different from the second refrigerant of the second refrigerant system 2.

When the first refrigerant system 1 is operated in a heating mode, the first refrigerant compressed by the first compressor 11 flows into the intermediate heat-exchanger 25 by the flow regulation of the first four-way valve 12. The first refrigerant flowing into the intermediate heat-exchanger 25 is heat-exchanged with the second refrigerant, and then flows into the first expansion part 14. Then, the first refrigerant is expanded by the first expansion part 14 and evaporated while it flows into the first heat-exchanger 13. The evaporated first refrigerant is introduced into the first compressor 11. That is, when the first refrigerant system 1 is operated in the heating mode, the second refrigerant compressed by the second compressor 21 flows into the second heat-exchanger 23 by the flow regulation of the second four-way valve 22. The second refrigerant flowing into the second heat-exchanger 23 is heat-exchanged with the water, and then flows into the second expansion part 24. Then, the second refrigerant is expanded by the second expansion part 24 and evaporated by heat-exchanging with the first refrigerant while it flows into the intermediate heat-exchanger 25. The evaporated second refrigerant is introduced into the second compressor 21. That is, when the second refrigerant system 2 is operated in the heating mode, the intermediate heat-exchanger 25 serves as an evaporator with respect to the second refrigerant system 2.

In Fig. 1, a solid line represents a refrigerant flow when each of the refrigerant systems is operated in a heating mode, and a dot line represents a refrigerant flow when each of the refrigerant systems is operated in a cooling mode.

In summary, when the each of the refrigerant systems 1 and 2 is operated in the heating mode, the intermediate heat exchanger 25 serves as a condenser with respect to the first refrigerant system 1 and an evaporator with respect to the second refrigerant system 2.

Thus, if the first refrigerant system 1 is operated in the cooling mode and the second refrigerant system is operated in the heating mode, the intermediate heat-exchanger 25 may serve as the evaporator with respect to each of the refrigerant systems 1 and 2.

In Fig. 1, although the first refrigerant and the second refrigerant have the same flow direction as each other in the intermediate heat-exchanger 25 when the respective refrigerant systems are operated in the heating mode, the first refrigerant and the second refrigerant may have flow directions opposite to each other by changing the connection positions of the refrigerant pipes.

The second refrigerant system 2 further includes a water flow device by which the water flows. The water flow device includes the first water pipe 30 through which the water flows, a flow switch 32 disposed in the first water flow pipe 30 to detect a water flow, an expansion tank 33 branched at a predetermined position spaced from the flow switch 32 in an water flow direction, a water collection tank 34 in which a portion of the first water pipe is inserted and including an auxiliary heater 35 therein, and a water pump 36 disposed at a predetermined position of a second water pipe 61 disposed at an outlet-side of the water collection tank 34.

The first water pipe 30 includes an inlet pipe disposed at an inlet-side of the second heat-exchanger 23, an outlet pipe 302 disposed at an outlet-side of the second heat-exchanger 23, and a branch pipe branched from the inlet pipe 301 and joint at the outlet pipe 302. The outlet pipe 302 is connected to the water collection tank 34. A water pump 310 for pumping the water is disposed on the inlet pipe 301.

In this embodiment, an inverter pump that can regulate an amount of the pumped water may be used as the water pumps 36 and 310.

The intermediate heat-exchanger 25 further includes a water passage 253 in which the water branched from the inlet pipe 301 flows. That is, the intermediate heat-exchanger 25 includes the first refrigerant passage 251, the second refrigerant passage 252, and the water passage 253.

The first refrigerant of the first refrigerant passage 251 is heat-exchanged with the second refrigerant of the second refrigerant passage 252, and the water of the water passage 253 is heat-exchanged with the first refrigerant of the first refrigerant passage 251.

On the other hand, the water of the water passage 252 may be heat may be heat-exchanged with the second refrigerant of the second refrigerant passage 252, or the water of the water passage 252 may be respectively heat-exchanged with the first refrigerant and the second refrigerant. However, to heat the water of the water passage 253, the water passage 252 may be disposed such that the water and the first refrigerant may be sufficiently heat-exchanged.

At this time, a passage extending from the inlet pipe 301 to the outlet pipe 302 via the second heat-exchanger 23 may be referred to as a main passage. Also, a passage branched from the inlet pipe 301 and extending to the outlet pipe 302 via the intermediate heat-exchanger 25 may be referred to as a sub passage.

Although the branch pipe 303 is connected to the outlet pipe 302 in this embodiment, the branch pipe 303 may be directly connected to the water collection tank 34 without being connected to the outlet pipe 302.

Valves 304 and 305 for regulating a flow amount of the water are disposed on inlet-side and outlet-side pipes of the intermediate heat-exchanger 25 of the branch pipe 303, respectively.

When the second refrigerant system 2 is operated in a heating mode, heat QH is transmitted from the second refrigerant discharged from the second compressor 21 and having a high temperature into the water flowing along the water passage 232. When the heat transmitted into the water passage 232, the water flowing the water passage 232 increases in temperature.

When the water heated while it passes through the second heat-exchanger 23 expanded to a volume greater than a reasonable volume, the expansion tank 33 performs a buffer function. A diaphragm (not shown) is disposed within the expansion tank 33 to move corresponding to the volume variation of the water of the outlet pipe 302. A nitrogen gas is filled into the expansion tank 33.

The water collection tank 34 stores the water supplied from the outlet pipe 302. The auxiliary heater 35 operated when the water has a temperature less than a required temperature is disposed within the water collection tank 34.

An air vent 343 for exhausting heated air existing within the water collection tank 34 is disposed in the water collection tank 34. Also, a pressure gauge 341 and a valve 342 for regulating a pressure within the water collection tank 35 are disposed in the water collection tank 34. For example, when the pressure within the water collection tank 35 detected by the pressure gauge 341 is excessively high, the valve 342 may be opened to decrease the pressure within the water collection tank 34.

The water pump 36 pumps the water of the water collection tank 34 to flow into the second water pipe 61. The water pumped into the second water pipe 61 may be supplied to the hot water supply part 4 or the cooling/heating part 5.

The hot water supply part 4 heats and supplies water required for wash up of a user or dish-washing.

In detail, a three-way valve 71 for regulating a flow direction of the water of the second water pipe 61 is disposed in the second water pipe 61. The water pumped by the water pump 36 flows into the hot water supply part 4 and/or the cooling/heating part 5 by the three-way valve 71.

Thus, a hot water supply pipe 62 extending to the hot water supply part 4 and a cooling/heating pipe 63 extending to the cooling/heating part 5 are connected to an outlet-side of the three-way valve 71. The water pumped by the water pump 36 flows into the hot water supply pipe 62 and/or the cooling/heating pipe 63 under the control of the three-way valve 71.

The hot water supply part 4 includes a hot water supply tank 41 storing water supplied from the outside and heating the stored water and an auxiliary heater 42 disposed within the hot water supply tank 41. Also, an auxiliary heat source supplying heat to the hot water supply tank 41 may be further disposed according to an installation configuration. A thermal storage tank using solar heat may be used as an available auxiliary heater. The hot water supply tank 41 includes a water inflow part 411 through which water is introduced and a water discharge part 412 through which heated water is discharged.

In detail, a portion of the hot water supply pipe 62 extending from the three-way valve 71 is inserted into the hot water supply tank 41 to heat the water stored in the hot water supply tank 41. That is, heat is transmitted from the hot water flowing into the hot water supply pipe 62 to the water stored in the hot water supply tank 41. In some case, the auxiliary heater 42 and the auxiliary heat source may be operated to additionally supply heat to the water stored in the hot water supply tank 41.

For example, when a large amount of hot water is required for the user's bath, since water should be heated at a short time, the auxiliary heater 42 or the auxiliary heat source may be operated. A temperature sensor 414 for detecting a water temperature may be disposed at a side of the hot water supply tank 41.

As necessary, hot water discharge device such as a shower 45 or an electric device such as a humidifier may be connected to the water discharge part 412. When the thermal storage tank 43 using the solar heat is used as the auxiliary heat source, a thermal storage pipe 47 extending from the thermal storage tank 43 may be inserted into the hot water supply tank 41. An auxiliary pump 44 for controlling a flow velocity within a thermal storage pipe close loop may be disposed on the thermal storage pipe 47. Also, a solenoid valve VA for controlling a flow direction of the water within the thermal storage pipe 47 may be disposed on the thermal storage pipe 47. A temperature sensor 471 for measuring a water temperature may be disposed at a side of the thermal storage pipe 47.

A structure of the auxiliary heat source such as a thermal storage part using the solar heat is not limited to the proposed embodiment. For example, the auxiliary heat source may have various configurations and be disposed at various positions.

The cooling/heating part 5 includes a floor cooling/heating unit 51 in which a portion of the cooling/heating pipe 63 is buried in an indoor floor and an air cooling/heating unit 52 branched from any position of the cooling/heating pipe 63 and connected to the floor cooling/heating unit 51 in parallel.

In detail, as illustrated in Fig. 1, the floor cooling/heating unit 51 may be buried in the indoor floor in a meander line type. The air cooling/heating unit 52 may include a fan coil unit or a radiator. A portion of the air cooling/heating pipe 54 branched from the cooling/heating pipe 63 is provided in the air cooling/heating unit 52 as a heat-exchanging unit. Flow switching valves 55 and 56 such as the three-way valve may be disposed at a position at which the air cooling/heating pipe 54 is branched. Thus, water flowing along the cooling/heating pipe 63 may be divided into the floor cooling/heating unit 51 and the air cooling/heating unit 52 or flow in one direction.

The hot water supply pipe 62 passing through the hot water supply tank 41 and the cooling/heating pipe 63 passing through the cooling/heating part 5 are connected to the inlet pipe 301.

Here, a check valve V for preventing the water within any one of the hot water supply pipe 62 and the cooling/heating pipe 63 from reversely flowing may be disposed in each of the hot water supply pipe 62 and the cooling/heating pipe 63.

In this embodiment, since the water flow device disposed in the second refrigerant system 2, the hot water supply part 4, and the cooling/heating part 5 form a water circulation cycle in which water is circulated, the above-described components may be referred to as a water circulation unit.

Hereinafter, a water flow generated in the water circulation apparatus associated with the refrigerant system will be described for each operation mode.

In this embodiment, the operation mode of the respective refrigerant systems includes the cooling mode, the heating mode, and the defrosting mode. Also, the hot water supply part performs a hot water supply mode, and the cooling/heating part performs the cooling mode and the heating mode.

Since the hot water supply mode of the hot water supply part and the heating mode of the cooling/heating part are mainly concerned in this embodiment, operations with respect to the above-described two modes will be described below.

In the hot water supply mode or the heating mode of the cooling/heating part, the respective refrigerant systems are operated in the heating mode.

As described above, when the respective refrigerant systems 1 and 2 are operated in the heating mode, the intermediate heat-exchanger 25 serves as a condenser with respect to the first refrigerant system 1 and an evaporator with respect to the second refrigerant system 2.

Thus, the second refrigerant flowing into the intermediate heat-exchanger 25 receives heat from the first refrigerant, and then, the second refrigerant increases in temperature. When the second refrigerant increases in temperature, the second refrigerant introduced into the second compressor 21 increases in temperature. When the second refrigerant introduced into the second compressor 21 increases in temperature, the second refrigerant discharged from the second compressed 21 increases in temperature. As a result, the refrigerant flowing into the second heat-exchanger 23 increases in temperature.

Thus, heat greater than that of the second refrigerant flowing into the second heat-exchanger 23 is transmitted to the water flowing into the second heat-exchanger 23 to significantly increase a temperature increment of the water.

At this time, according to characteristics of the respective refrigerants, a condensing temperature of the second refrigerant (or an outlet-side temperature of the second compressor 2) is higher than that (or an outlet-side temperature of the first compressor) of the first refrigerant.

In case of an existing system, since water is heat-exchanged with a refrigerant of a single refrigerant system, it may be easily seen that the temperature increment of the water according to this system is higher than that according to the existing system.

The temperature increase of the water heat-exchanged in the second heat-exchanger 23 represents that the temperature of the water stored in the water collection tank 34 increases than the water temperature of the existing system. Thus, water having a relatively higher temperature may be obtained, and the indoor room may be heated using the water having the relatively higher temperature.

Thus, according to this embodiment, the water having the relatively higher temperature may be obtained. Also, the cooling/heating system may be stably operated to obtain the water having a high temperature even through a temperature of the indoor room is very low.

When the hot water supply mode is selected, water flows into the hot water supply pipe 62 by the three-way valve 71. Thus, the water flows along the close loop in which the second heat-exchanger 23, the water collection tank 34, the water pump 36, the three-way valve 71, and the hot water supply pipe 62 are connected to each other. In such a circulation process, the water introduced through the water inflow part 411 of the hot water supply tank 41 is heated, and then discharged through the water discharge part 412, thereby supplying the water to the user.

When the heating mode of the cooling/heating part 5 is selected, water flows into the cooling/heating pipe 63 by the three-way valve 71. Thus, the ware flows along the close loop in which the second heat-exchanger 23, the water collection tank 34, the water tank 36, the three-way valve 71, and the cooling/heating pipe 63 are connected to each other. The water flowing along the cooling/heating pipe 63 flows into the air cooling/heating unit 52 or the floor cooling/heating unit 51.

The hot water supply mode and the heating mode of the cooling/heating part may be selected at the same time. In this case, the water flows into the hot water supply pipe 62 and the cooling/heating pipe 63 by the three-way valve 71.

As described above, when the respective refrigerant systems are operated in the heating mode, the first heat-exchanger 13 of the first refrigerant system 1 serves as an evaporator. Thus, when the first refrigerant system 1 is continuously operated in the heating mode, frost may be generated on the first heat-exchanger 13. Therefore, the defrosting process is required.

Hereinafter, the defrosting operation of the first heat-exchanger 13 will be described.

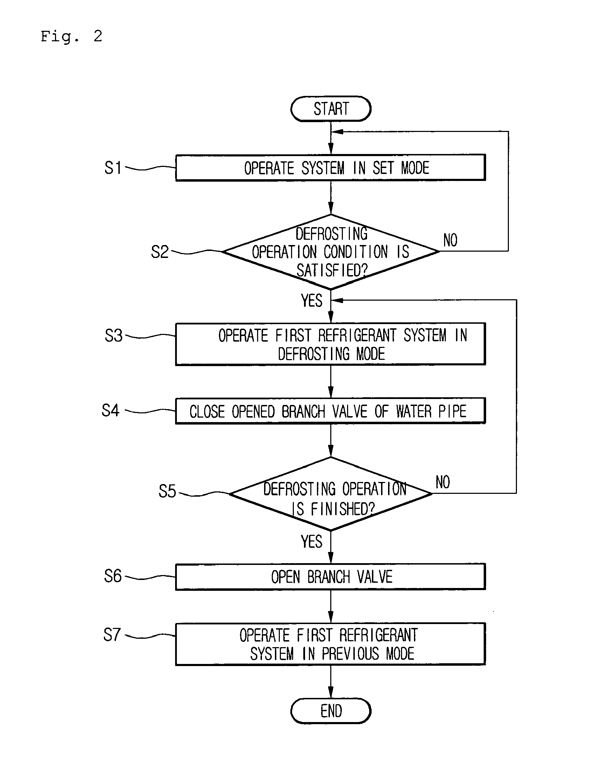

Fig. 2 is a flowchart illustrating a defrosting operation method of a water circulation apparatus associated with a refrigerant system according to a first embodiment.

Referring to Figs. 1 and 2, the water circulation apparatus S associated with the refrigerant system according to this embodiment is operated in a mode set by the user in operation S1. Since the defrosting operation of the first heat-exchanger 13 is mainly concerned in this embodiment, a case in which the respective refrigerant systems 1 and 2 are operated in the heating mode will be described.

When the respective refrigerant systems 1 and 2 are operated in the heating mode, the branch valves 304 and 305 of the branch pipe 303 are opened. Thus, a portion of water flowing into the inlet pipe 301 flows into the second heat-exchanger 23, and the other portion of the water flows into the branch pipe 303.

The water flowing from the inlet pipe 301 to the second heat-exchanger 25 is heat-exchanged with the second refrigerant, and the water branched by the branch pipe 303 is heat-exchanged with the first refrigerant in the intermediate heat-exchanger 25.

At this time, it may be easily seen that a temperature of the water heat-exchanged with the second refrigerant is greater than that of the water heat-exchanged with the first refrigerant.

In operation S2, it is determined whether a defrosting operation condition is satisfied during the preset mode of the water circulation apparatus S. For example, whether the defrosting operation condition is satisfied may be determined by comparing a temperature of a pipe outlet-side of the first heat-exchanger 13 to a temperature of the indoor room. However, in this embodiment, whether the defrosting operation condition may be satisfied may be determined through various methods, and this embodiment is not limited thereto.

In the determination result in operation S2, when the defrosting operation condition is satisfied, the first refrigerant system 1 is operated in the defrosting mode in operation S3, and the second refrigerant system 2 is maintained in the present operation mode (the heating mode). In this embodiment, when the first refrigerant system is operated in the defrosting mode regardless of the operation mode of the second refrigerant system, the water circulation apparatus is operated in the defrosting mode.

In this embodiment, a state in which the first refrigerant system 1 is operated in the defrosting mode represents a state in which the first refrigerant system 1 is operated in the cooling mode.

When the first refrigerant system 1 is operated in the defrosting mode, the intermediate heat-exchanger 25 serves as an evaporator with respect to the respective refrigerant systems 1 and 2, and the first heat-exchanger serves as a condenser with respect to the respective refrigerant systems 1 and 2. Thus, during the defrosting mode of the first refrigerant system 1, the defrosting operation of the first heat-exchanger 13 is performed by the high temperature refrigerant flowing into the first heat-exchanger 13.

At this time, since the intermediate heat-exchanger 25 serves as the evaporator with respect to the respective refrigerant systems 1 and 2, low temperature refrigerants are heat-exchanged with each other to reduce vapor pressures of the respective refrigerant systems 1 and 2. Thus, cycle performances of the respective refrigerant systems 1 and 2 may be deteriorated, and the respective compressors may be damaged.

Thus, in this embodiment, to prevent the vapor pressures of the respective refrigerant systems 1 and 2 from being reduced, during the defrosting mode of the first refrigerant system 1, the branch valves 304 and 305 are closed in operation S4. Thus, the water does not flow into the branch pipe 303, and the first refrigerant is heat-exchanged with the hot water within the branch pipe 303. Since the first refrigerant heat-exchanged with the hot water is heat-exchanged with the second refrigerant, each of the refrigerants may increase in temperature to minimize the reduction of the vapor pressures of the respective refrigerant systems 1 and 2.

In operation S5, it is determined whether the defrosting operation is finished during the defrosting mode of the first refrigerant system 1.

When the defrosting operation is finished, the closed branch valves 304 and 305 are opened in operation S6. In operation S7, the first refrigerant system 1 is operated in the previous mode. As a result, in this embodiment, the first refrigerant system 1 is operated in the heating mode.

According to this embodiment, during the defrosting mode of the first refrigerant system 1, since the second refrigerant system 2 is operated in the heating mode, the hot water may be obtained, and the indoor room may be heated using the hot water.

Also, since the hot water is heat-exchanged with the first refrigerant flowing into the intermediate heat-exchanger 25 to increase a temperature of the first refrigerant, the reduction of the vapor pressures of the respective refrigerant systems may be minimized. Thus, the performance deterioration of the respective refrigerant systems may be minimized.

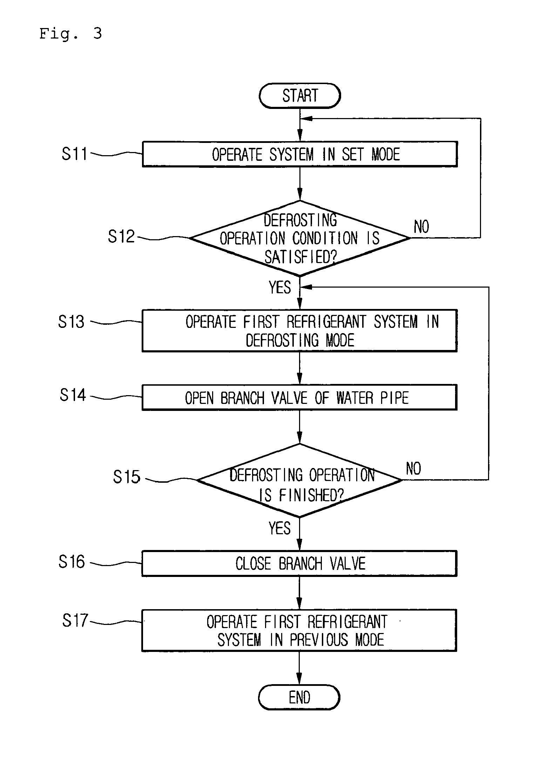

Fig. 3 is a flowchart illustrating a defrosting operation method of a water circulation apparatus associated with a refrigerant system according to a second embodiment.

This embodiment is equal to the first embodiment except an operation of a branch valve. Thus, only specific portions of this embodiment will be described below, and the same elements as those of the first embodiment will be revisited by referring to the same reference numbers of the corresponding elements.

Referring to Figs. 1 and 3, a water circulation apparatus associated with a refrigerant system according to this embodiment is operated in a mode set by a selection of a user in operation S11. Since a defrosting operation of a first heat-exchanger 13 is mainly concerned in this embodiment, a case in which respective refrigerant systems 1 and 2 are operated in a heating mode will be described.

When the respective refrigerant systems 1 and 2 are operated in the heating mode, branch valves 304 and 305 of a branch pipe 303 are closed.

Thus, all of water flowing into an inlet pipe 301 flows into a second heat-exchanger 23 to heat-exchange with a second refrigerant.

When the second refrigerant system 2 is operated in the heating mode, water flowing into an inlet pipe 301 and water flowing into an outlet pipe 303 continuously increase in temperature.

In operation S12, it is determined whether a defrosting operation condition is satisfied when the water circulation apparatus S is operated in the set mode.

In the determination result in operation S12, when the defrosting operation condition is satisfied, the first refrigerant system 1 is operated in the defrosting mode, and the second refrigerant system 2 is maintained in the present operation mode (the heating mode).

When the first refrigerant system 1 is operated in the defrosting mode, an intermediate heat-exchanger 25 serves as an evaporator with respect to the respective refrigerant systems 1 and 2, and the first heat-exchanger serves as a condenser with respect to the respective refrigerant systems 1 and 2. Thus, when the first refrigerant system 1 is operated in the defrosting mode, the defrosting operation of the first heat-exchange 13 is performed by a high-temperature refrigerant flowing into the first heat-exchanger 13.

When the first refrigerant system 1 is operated in the defrosting mode, the branch valves 304 and 305 are opened in operation S14.

When the branch valves 304 and 305 are opened, a portion of the water of the inlet pipe 301 flows into the intermediate heat-exchanger 25, and thus, the hot water is heat-exchanged with the first refrigerant. Then, the first refrigerant heat-exchanged with the hot water is heat-exchanged with the second refrigerant to increase the temperatures of the respective refrigerants. As a result, the reduction of vapor pressures of the respective refrigerant systems 1 and 2 may be minimized.

Then, in operation S15, it is determined whether the defrosting operation is finished during the defrosting mode of the first refrigerant system 1.

When the defrosting operation is finished, the branch valves 304 and 305 are closed in operation S16. Also, in operation S17, the first refrigerant system 1 is operated in the previous mode. In this embodiment, the first refrigerant system 1 will be operated in the heating mode.

The following embodiment in addition to the previously described two embodiments may be further performed.

In case where the first refrigerant system 1 is operated in the defrosting mode during the heating mode operation of each of the refrigerant systems 1 and 2, if the branch valves 304 and 305 were in the closed state, the branch valves 304 and 305 are opened. Also, when the defrosting operation is finished, the branch valves 304 and 305 may be closed.

On the other hand, when the branch valves 304 and 305 are in the opened state, the branch valves 304 and 305 may be maintained in the opened state during the defrosting mode operation of the first refrigerant system 1.

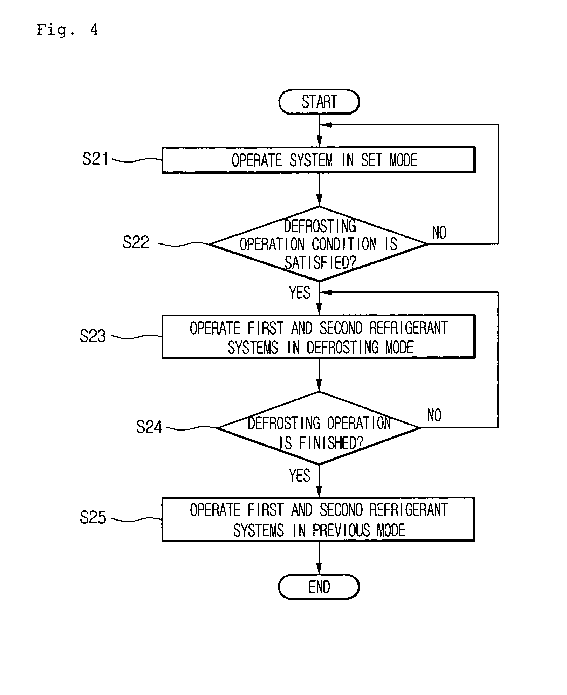

Fig. 4 is a flowchart illustrating a defrosting operation method of a water circulation apparatus associated with a refrigerant system according to a third embodiment.

This embodiment is equal to the previously described embodiments except that a second refrigerant system is operated also in a defrosting mode when a first refrigerant system is operated in the defrosting mode. Thus, only specific portions of this embodiment will be described below.

Referring to Figs. 1 and 4, a water circulation apparatus S associated with a refrigerant system according to this embodiment is operated in a mode set by a selection of a user in operation S21. Since a defrosting operation of a first heat-exchanger 13 is mainly concerned in this embodiment, a case in which respective refrigerant systems 1 and 2 are operated in a heating mode will be described.

In operation S22, it is determined whether a defrosting operation condition is satisfied when the water circulation apparatus S is operated in the set mode.

In the determination result in operation S22, when the defrosting operation condition is satisfied, the first and second refrigerant systems 1 and 2 are operated in the defrosting mode in operation S23.

In this embodiment, the defrosting mode operation of the first refrigerant system 1 represents a cooling mode operation of the first refrigerant system 1.

Also, the defrosting mode operation of the second refrigerant system 2 represents the following two cases. Firstly, the operation of the second refrigerant system 2 is stopped. Secondly, the second refrigerant system is fundamentally operated in the heating mode, and also, a second compressor 21 is operated at a frequency (e.g., a minimum frequency) lower than an operation frequency thereof in the previous mode (the heating mode).

In the first case, when the second refrigerant system 2 is operated in the heating mode, if branch valves 304 and 305 were in an opened state, the branch valves 304 and 305 are closed. When the branch valves 304 and 305 are closed, hot water within a branch pipe is heat-exchanged with a first refrigerant as described in the first embodiment.

In the second case, when the second refrigerant system 2 is operated in the heating mode, the branch valves 304 and 305 may be in a closed or opened state. The opening or closing of the branch valves 304 and 305 when the respective refrigerant systems 1 and 2 are operated in the defrosting mode may be adjusted by the methods described in the previous embodiments.

According to the two cases, it may be easily seen that the reduction of the vapor pressures of the respective refrigerant systems 1 and 2 is minimized.

Then, in operation S24, it is determined whether the defrosting operation is finished during the defrosting operation of each of the respective refrigerant systems 1 and 2.

When the defrosting operation is finished, the respective refrigerant systems 1 and 2 are operated in the previous mode in Operation S25. In this embodiment, the respective refrigerant systems 1 and 2 will be operated in the heating mode.

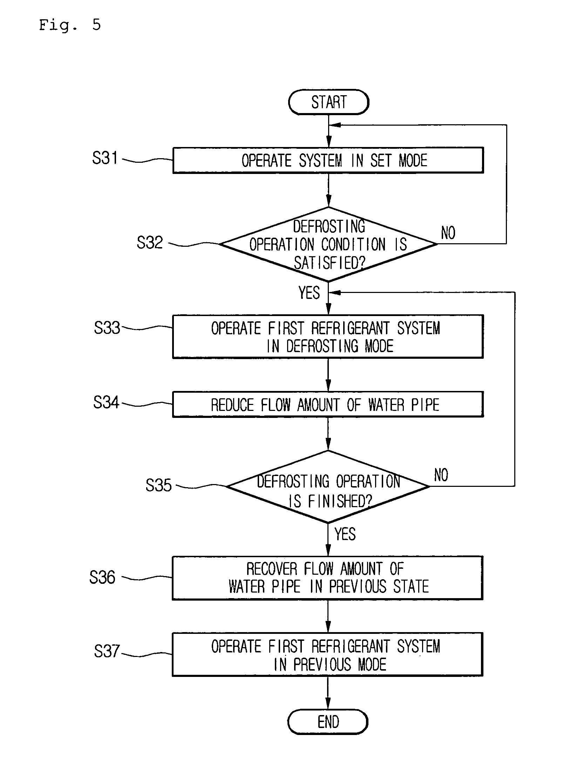

Fig. 5 is a flowchart illustrating a defrosting operation method of a water circulation apparatus associated with a refrigerant system according to a fourth embodiment.

This embodiment is equal to the first and second embodiments except that an amount of water flowing into a second water pipe decreases when a first refrigerant system 1 is operated in a defrosting mode. Thus, only specific portions of this embodiment will be described below.

Referring to Figs. 1 and 5, a water circulation apparatus S associated with a refrigerant system according to this embodiment is operated in a mode set by a selection of a user in operation S31. Since a defrosting operation of a first heat-exchanger 13 is mainly concerned in this embodiment, a case in which respective refrigerant systems 1 and 2 are operated in a heating mode will be described.

In operation S32, it is determined whether a defrosting operation condition is satisfied when the water circulation apparatus S is operated in the set mode.

In the determination result in operation S32, when the defrosting operation condition is satisfied, the first refrigerant system 1 is operated in the defrosting mode, and the second refrigerant system 2 is maintained in the present operation mode (the heating mode) S33.

When the first refrigerant system 1 is operated in the defrosting mode, an intermediate heat-exchanger 25 serves as an evaporator with respect to the respective refrigerant systems 1 and 2.

When the intermediate heat-exchanger 25 serves as the evaporator with respect to the respective refrigerant systems 1 and 2, vapor pressures of the respective refrigerant systems 1 and 2 are reduced as described above. As a result, a condensing temperature of a second refrigerant is reduced in the second heat-exchanger 23. When the condensing temperature of the second refrigerant is reduced, water stored in a water collection tank 34 decreases in temperature.

When the water stored in the water collection tank 34 decreases in temperature, water flowing into a cooling/heating pipe 63 of a cooling/heating part 5 may decrease in temperature to lower a temperature of an indoor room.

Thus, when the first refrigerant system is operated in the frosting mode in this embodiment, an operation of a water pump 36 is changed such that an amount of water pumped into a second water pipe 61 is reduced when compared that the first refrigerant system 1 is operated in the heating mode S34. In this case, since an amount of water flowing into the cooling/heating pipe 63 of the cooling/heating part 5 may be reduced to minimize the temperature reduction of the indoor room.

Then, in operation S35, it is determined whether the defrosting operation is finished during the defrosting mode operation of the first refrigerant system 1.

When the defrosting operation is finished, the water pump 36 is operated in the previous state. Thus, the amount of the water flowing into the second water pipe 61 is recovered to the previous state in operation S36. Also, in operation S37, the first refrigerant system 1 is operated in the previous mode.

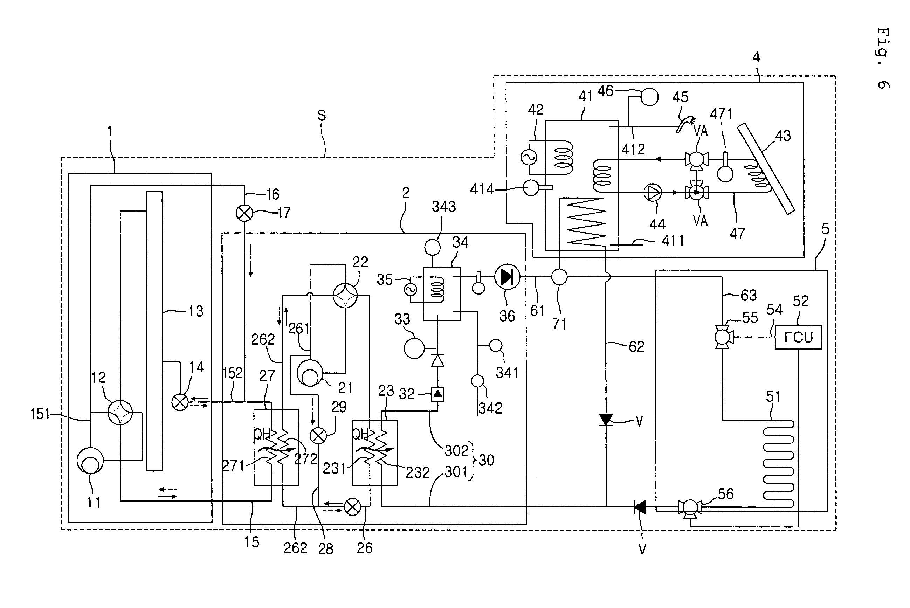

Fig. 6 is a schematic view of a water circulation apparatus associated with a refrigerant system according to a fifth embodiment.

This embodiment is equal to the first embodiment except a structure of an intermediate heat-exchanger and a structure in which a bypass pipe is disposed in each of respective refrigerant pipes. Thus, only specific portions of this embodiment will be described below, and the same elements as those of the first embodiment will be revisited by referring to the same reference numbers of the corresponding elements.

Referring to Fig. 6, an intermediate heat-exchanger 27 according to this embodiment includes a first refrigerant passage 271 through which a first refrigerant flows and a second refrigerant passage 272 through which a second refrigerant flows.

When a first refrigerant system 1 is operated in a cooling mode, a first bypass pipe 16 for bypassing the first refrigerant discharged from a first compressor 11 and having a high temperature is connected to an outlet-side pipe 151 of the first compressor 1 and an inlet-side pipe 152 of the first refrigerant passage 271 of the intermediate heat-exchanger 27.

The first bypass pipe 16 includes a first bypass valve 17 for regulating a flow amount of the first refrigerant.

Also, when a second refrigerant system 2 is operated in a heating mode, a second bypass pipe 28 for bypassing the second refrigerant discharged from a second compressor 21 and having a high temperature is connected to an outlet-side pipe 261 of the second compressor 21 and an inlet-side pipe 262 of the second refrigerant passage 272 of the intermediate heat-exchanger 27.

The second bypass pipe 28 includes a second bypass valve 29 for regulating a flow amount of the second refrigerant.

The respective bypass valves 17 and 29 may be opened when the first refrigerant system 1 is operated in a defrosting mode.

In Fig. 6, a solid line represents a refrigerant flow when each of the refrigerant systems is operated in a heating mode, and a dot line represents a refrigerant flow when each of the refrigerant systems is operated in a cooling mode. Also, a chain line represents a refrigerant flow when each of the refrigerant systems is operated in the defrosting mode.

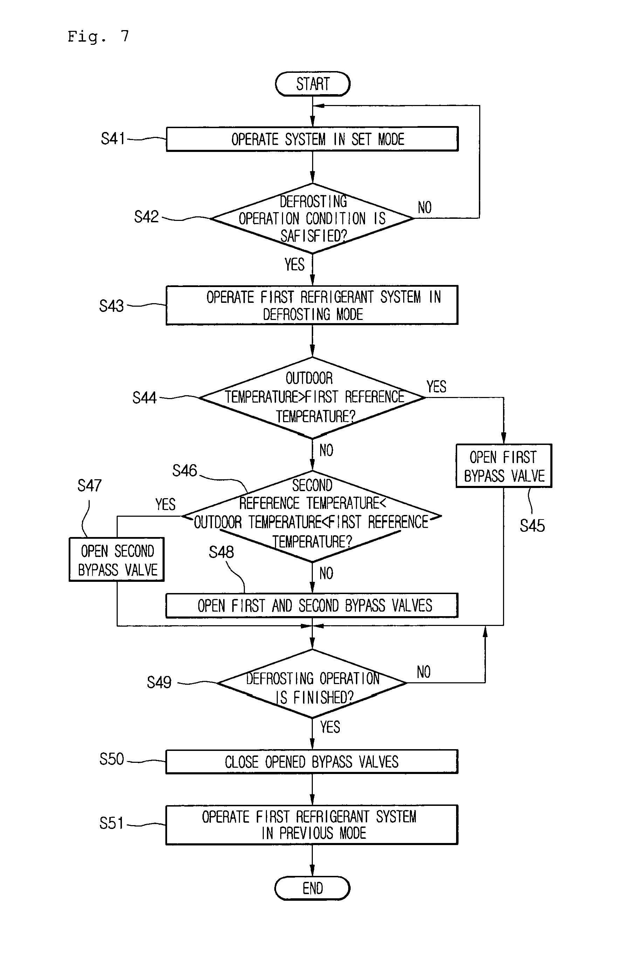

Fig. 7 is a flowchart illustrating a defrosting operation method of a water circulation apparatus associated with a refrigerant system according to a fifth embodiment.

Referring to Figs. 6 and 7, a water circulation apparatus S associated with a refrigerant system according to this embodiment is operated in a mode set by a selection of a user in operation S41. Since a defrosting operation of a first heat-exchanger 13 is mainly concerned in this embodiment, a case in which respective refrigerant systems 1 and 2 are operated in a heating mode will be described.

In operation S42, it is determined whether a defrosting operation condition is satisfied when the water circulation apparatus S is operated in the set mode.

In the determination result in operation S42, when the defrosting operation condition is satisfied, the first refrigerant system 1 is operated in the defrosting mode, and the second refrigerant system 2 is maintained in the present operation mode (the heating mode) in operation S43.

When the first refrigerant system 1 is operated in the defrosting mode, an intermediate heat-exchanger 27 serves as an evaporator with respect to the respective refrigerant systems 1 and 2, and the first heat-exchanger 13 serves as a condenser with respect to the respective refrigerant systems 1 and 2. Thus, when the first refrigerant system 1 is operated in the defrosting mode, the defrosting operation of the first heat-exchange 13 is performed by a high-temperature refrigerant flowing into the first heat-exchanger 13.

At this time, since the intermediate heat-exchanger 27 serves as the evaporator with respect to the respective refrigerant systems 1 and 2, vapor pressures of the respective refrigerant systems 1 and 2 may be reduced to deteriorate cycle performance of each of the refrigerant systems 1 and 2 or damage the respective compressor.

Thus, in this embodiment, to prevent a vapor pressure of the intermediate heat-exchanger 27 from being reduced, when the respective refrigerant systems 1 and 2 are operated in the defrosting mode, one of the bypass valves 17 and 29 is opened according to an indoor temperature.

In operation S44, it is determined whether an indoor temperature detected by an indoor temperature sensor (not shown) exceeds a first reference temperature. For example, the first reference temperature may be about 5°C.

When the indoor temperature exceeds the first reference temperature, the first bypass valve 17 is operated to allow the first refrigerant having a high temperature to flow into the first bypass pipe 16 in operation S45.

On the other hand, when the indoor temperature does not exceed the first reference temperature, it is determined whether the next detected indoor temperature is between a second reference temperature lower than the first reference temperature and the first reference temperature in operation S46. For example, the second reference temperature may be about -5°C.

When the detected indoor temperature is between the second reference temperature and the first reference temperature, the second bypass valve 29 is operated to allow the second reference having a high temperature to flow into the second bypass pipe 28 in operation S47.

On the other hand, when the detected indoor temperature is less than the second reference temperature, the first and second bypass valves 17 and 29 are operated to allow the first refrigerant having the high temperature to flow into the first bypass pipe 16 and the second refrigerant having the high temperature to flow into the second bypass pipe 28 in operation S48.

When the high temperature refrigerant is bypassed into one or more pipes of the bypass pipes 16 and 28, since the first refrigerant and/or the second refrigerant increase in temperature, it may prevent the vapor pressures of the respective refrigerant systems 1 and 2 from being reduced.

Then, in operation S49, it is determined whether the defrosting operation is finished during the defrosting operation mode of the first refrigerant system 1.

When the defrosting operation is finished, the opened bypass valve is closed in operation S50. Also, in operation S51, the first refrigerant system 1 is operated in the previous mode. In this embodiment, the first refrigerant system 1 will be operated in the heating mode.

As described in the third and fourth embodiments, during the defrosting mode of the first refrigerant system 1 according to this embodiment, the second refrigerant system 2 may be operated in the defrosting mode or an amount of the water flowing into the cooling/heating pipe 63 may be reduced.

In case where the operation of the second refrigerant system 2 is stopped, when the defrosting operation condition is satisfied, the first bypass valve 17 is always operated to allow the first refrigerant to flow into the first bypass pipe 16.

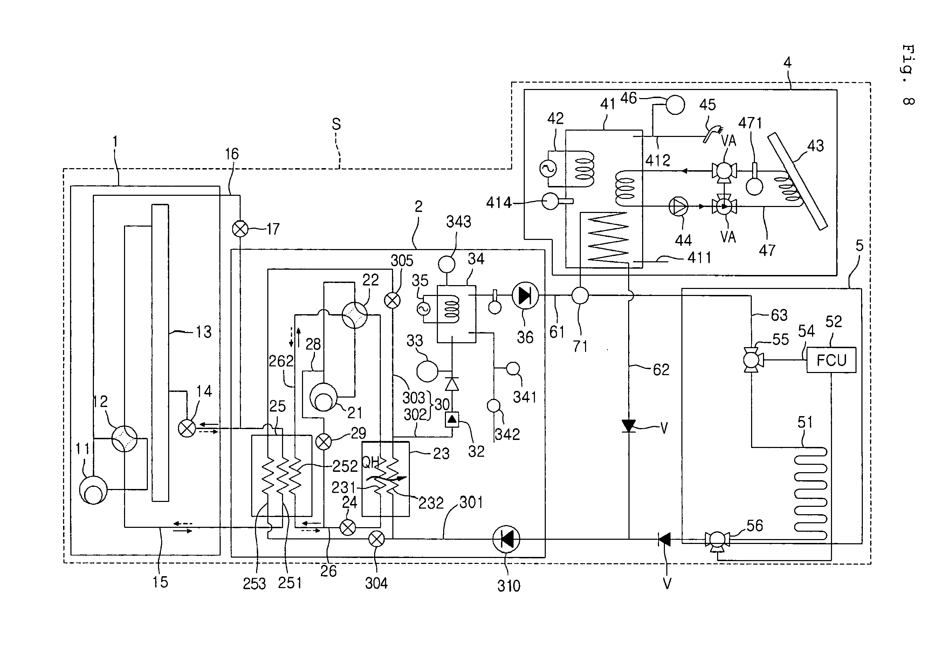

Fig. 8 is a schematic view of a water circulation apparatus associated with a refrigerant system according to a sixth embodiment.

Referring to Fig. 8, a water circulation apparatus S according to this embodiment may further include the bypass pipes 16 and 28 and the bypass valves 17 and 29 of the fifth embodiment except the elements of the water circulation apparatus of the first embodiment.

According to this embodiment, since heat is transmitted to a first refrigerant and/or a the second refrigerant by hot water of a branch pipe 303 and a high temperature refrigerant of a bypass pipe, the reduction of the vapor pressures of the respective refrigerant systems may be further minimized.

According to the proposed embodiments, since the second refrigerant heat-exchanged with the first refrigerant of the first refrigerant system is heat-exchanged with water, high temperature water may be obtained.

Also, even through the indoor temperature is very low, the refrigerant systems may be stably operated and the high temperature water may be obtained.

Also, since the second refrigerant system is operated in the heating mode during the defrosting mode operation of the first refrigerant system, the high temperature water may be obtained and the indoor room may be heated using the high temperature water.

Also, when the first refrigerant system is operated in the defrosting mode, since the first or second refrigerant absorbs heat from the hot water or the high temperature refrigerant discharged from the compressor, the refrigerants may increase in temperature to minimize the reduction of the vapor pressures of the respective refrigerant systems.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A water circulation apparatus associated with a refrigerant system, the water circulation apparatus comprising:
a first refrigerant system comprising a first compressor and a first heat-exchanger in which air is heat-exchanged with a first refrigerant, the first refrigerant system performing a refrigerant cycle in which the first refrigerant flows;
a second refrigerant system comprising a second compressor, the second refrigerant system performing a refrigerant cycle in which a second refrigerant flows;
an intermediate heat-exchanger in which the first refrigerant is heat-exchanged with the second refrigerant while the first and second refrigerant flow; and
a water circulation unit in which water is heat-exchanged with the second refrigerant while the water is circulated, the water circulation unit performing a water circulation cycle,
wherein the water circulation unit comprises a water pipe through which the water flows, a branch pipe branched from the water pipe to pass through the intermediate heat-exchanger, and a valve disposed in the branch pipe to regulate a flow of the water,
wherein, when a defrosting operation condition for defrosting the first heat-exchanger is satisfied during heating mode operations of the first refrigerant system and the second refrigerant system, the first refrigerant system is operated in a cooling mode, and water within the branch pipe is heat-exchanged with one or more refrigerants flowing into the intermediate heat-exchanger.

2. The water circulation apparatus according to claim 1, wherein the valve is opened during the heating mode operations of the first and second refrigerant systems, and the valve is closed when the defrosting operation condition is satisfied.

3. The water circulation apparatus according to claim 2, wherein, when the defrosting operation condition is satisfied, an operation of the second refrigerant system is stopped.

4. The water circulation apparatus according to claim 1, wherein the valve is closed during the heating mode operations of the first and second refrigerant systems, and the valve is opened when the defrosting operation condition is satisfied.

5. The water circulation apparatus according to claim 1, wherein the valve is maintained in an opened state regardless of an operation mode of the second refrigerant system.

6. The water circulation apparatus according to any one of claims 1 to 5, wherein, when the defrosting operation condition is satisfied, the second refrigerant system is operated in a defrosting mode, and an operation frequency of the second compressor during the defrosting mode operation of the second refrigerant system is less than that of the second compressor during the heating mode operation of the second refrigerant system.

7. The water circulation apparatus according to claim 1, wherein the water circulation unit comprises an inverter pump regulating a flow amount of water pumped into the water pipe, and
when the defrosting operation condition is satisfied, the inverter pump is operated to reduce the flow amount of the water pipe than that of the water pipe in the heating mode.

8. The water circulation apparatus according to any one of claims 1 to 7, wherein the water circulation unit comprises a water collection tank in which the water passing through the second heat-exchanger is stored, and
the water pipe comprises an inlet pipe of the second heat-exchanger and an outlet pipe of the second heat-exchanger,
wherein the outlet pipe of the second heat-exchanger is connected to the water collection tank.

9. The water circulation apparatus according to claim 8, wherein the branch pipe is branched from the inlet pipe and joint at the outlet pipe.

10. The water circulation apparatus according to claim 8, wherein the branch pipe is branched from the inlet pipe, passes through the intermediate heat-exchanger, and is connected to the water collection tank.

11. The water circulation apparatus according to claim 1, wherein a bypass pipe bypassing the first refrigerant or the second refrigerant into the intermediate heat-exchanger is disposed at an outlet-side of the first compressor or the second compressor, and
a bypass valve regulating a flow amount of the refrigerant is disposed in the bypass pipe,
wherein, when the defrosting operation condition for defrosting the first heat-exchanger is satisfied, the bypass valve is opened.

12. The water circulation apparatus according to claim 11, wherein the bypass pipe comprises:
a first bypass pipe for bypassing the refrigerant discharged from the first compressor toward the intermediate heat-exchanger, and a second bypass pipe for bypassing the refrigerant discharged from the second compressor toward the intermediate heat-exchanger,
the bypass valve comprises:
a first bypass valve and a second bypass valve disposed in the first and second bypass pipes, respectively,
wherein, when the defrosting operation condition is satisfied, the number of opened bypass valves is varied according to an outdoor temperature.

13. The water circulation apparatus according to claim 12, wherein, when an outdoor temperature is greater than a first reference temperature, the first bypass valve is opened,
when the outdoor temperature is between a second reference temperature less than the first reference temperature and the first reference temperature, the second bypass valve is opened, and
when the outdoor temperature is less than the second reference temperature, the first and second bypass valves are opened.

14. The water circulation apparatus according to any preceding claim, wherein the first refrigerant comprises an R410a, and the second refrigerant comprises an R134a.
